# EUROPEAN PATENT APPLICATION

(11) **EP 2 111 000 A1**
(43) Date of publication of application: **21.10.2009**
(21) Application number: 08154679.8
(22) Date of filing: 17.04.2008
(51) Int. Cl.: H04L 12/56

(54) **Flexible advertisement in mesh-type networks**

(71) Applicant: Koninklijke Philips Electronics N.V., 5621 BA Eindhoven (NL)
(72) Inventor: The designation of the inventor has not yet been filed
(74) Representative: Damen, Daniel Martijn

(57) **Abstract**

The present invention relates to a method and apparatuses which enable flexible spreading of an advertised information by addition of a propagation control value or information, which is spread along the advertised information to flexibly adapt the spreading area to a current channel situation at hand.

## Description

### FIELD OF THE INVENTION

The present invention generally relates to apparatuses, a system and a method of advertising status information (e.g. reservations or the like) in wireless transmission systems such as - but not restricted to - a mesh of a wireless local area network (WLAN).

### BACKGROUND OF THE INVENTION

In WLAN deployments without mesh services, end stations (STAs) must associate with an access point (AP) in order to gain access to the network. These end stations are dependent on the access point with which they are associated to communicate.

A so-called mesh network appears functionally equivalent to a broadcast Ethernet from the perspective of other networks and higher layer protocols. As an example, the mesh network may be an LAN according to the IEEE (Institute of Electrical and Electronics Engineers) 802.11 specifications, where links and control elements forward frames among the network members. Thus, it normally appears as if all mesh points (MPs) in a mesh are directly connected at the link layer. This functionality is transparent to higher layer protocols.

In wireless communication systems, such as 802.11, transmissions are vulnerable to interference. Thus, simultaneously transmitted transmission can collide and corrupt each other. Medium access problems are aggravated in scenarios where the radio node density is high, and where there many hidden nodes are provided. The "hidden node problem" appears in wireless networks where two communicating nodes can communicate with a third station, but cannot directly communicate with each other due to physical or spatial limitations. An example where this may happen and cause severe problems is in mesh networks.

For this reason, a reservation mechanism called mesh deterministic access (MDA) has been proposed, where radio nodes agree upon a (periodic) data exchange via a reservation handshake. The reservation is then advertised by the transmitter-receiver (TX-RX) pair in mesh deterministic access opportunity (MDAOP) advertisements, which can be provided in beacons or in special advertisement messages.

The reserved data transmission can now be protected from interference, for example, by the following rules. Firstly, radio nodes that advertise a reservation (either in a "TX-RX" times section or in an "interference time" section) may not be allowed to initiate a transmission during a reserved time period, unless the transmission concerned is the reserved transmission itself, or unless the reserved transmission has already been completed. Secondly, radio nodes that overhear an advertisement of such a reserved transmission, but that do not advertise the reservation themselves, may initiate a transmission during the reserved time period, but not with a radio node that advertises the transmission.

A transmission range may be defined as the distance at which a transmission can still be correctly received, when there is no interference present. Additionally, an interference range can be defined as the maximum distance, relative to a transmitter-receiver pair, at which a concurrent transmission destructively interferes with a transmission between the pair.

A conventional mechanism may prevent transmissions in an area which is fixed around a receiver. Thereby, the receiver can be protected against interference from transmissions within the area with itself at the center and with radius equal to one transmission range. A station which is outside the transmission range of both receiver and transmitter does not receive an advertisement of the reservation in the "TX-RX" section of the advertised reservation. Hence, it can initiate a transmission to another radio node which is outside this transmission range. This, however, generates a problem with the reservation-advertisement mechanism. The reservation area (in which no transmissions can be initiated) is fixed and independent of the distance between the transmitter and the receiver. However, the actual interference area, i.e. the area from which a destructively interfering transmission can be initiated may be larger or smaller, depending on the distance between the transmitter and receiver in the transmitter receiver pair.

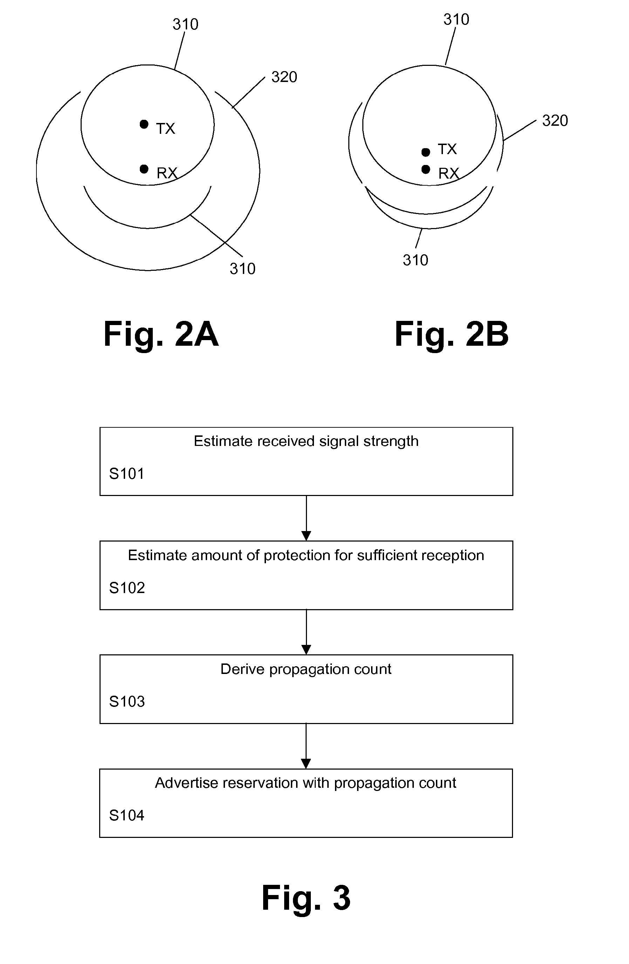

Figs. 2A and 2B show different scenarios where the interference area depends on a distance between a transmitter (TX) and a receiver (RX). Respective transmission ranges 310 and an interference range 320 are shown around the transmitter and the receiver.

Firstly, as depicted in Fig. 2B if the distance between the transmitter and the receiver is small, then the area (e.g. interference range 320) reserved via the advertisements may be too large. This results in an "exposed" radio node issue in which radio nodes are prevented from initiating a transmission, although they could do so without causing destructive interference.

Secondly, as depicted in Fig. 2A, if the distance between the transmitter and the receiver is large, then the area (e.g. interference range 320) reserved via the advertisements may be too small. This results in a "hidden" terminal issue in which radio nodes, that cause destructive interference, are not prevented from initiating a transmission.

As another example, the interference area 320 (or reservation area) may depend on a modulation and coding scheme used for transmission. Thus, if the data transmission rate is high, the transmission is more vulnerable to interference and the interference area 320 could be large. Conversely, if the used transmission rate is low, the transmission is less vulnerable, the interference area 320 is smaller and the reservation area can be decreased to improve spatial reuse.

However, in a wireless communication both transmitter and receiver may act as both transmitter and as receiver, because of the required transmission and reception of acknowledgements. It can thus easily happen that the received signal strength of the transmitter to receiver transmission is remarkably different from the transmission from the receiver to the transmitter. Consequently, the interference area around the station with the weakest received signal strength must be larger than the interference area around the station with the strongest received signal strength.

### SUMMARY OF THE INVENTION

It is an object of the present invention to provide a more flexible advertisement approach.

This object is achieved, at a transmitting end of an advertisement, by an apparatus as claimed in claim 1, at a receiving or overhearing end of an advertisement, by an apparatus as claimed in claim 5, and by a method as claimed in claim 13.

Accordingly, the above drawbacks associated with conventional fixed propagation of advertisements can be overcome by adding the proposed propagation information, which enables adaptive advertisement areas or ranges. The conventional fixed propagation mechanisms can not adapt to the situation or reception condition at hand, such as a distance between transmitter and receiver of an advertisement, a received signal strength, or a modulation and coding rate at which the message is transmitted. An additional situation where the proposed adaptation can be useful is the case of asymmetrical communication.

The proposed apparatuses may be implemented as processor devices, modules, chips, chip sets or circuitries provided in a network node or station. A processor may be controlled by a computer program product comprising code means for performing the steps of the claimed method when run on a computer or processor device.

According to a first aspect, the estimator may be adapted to estimate received signal strength and to estimate the required amount of protection based on the estimated signal strength. The received signal strength provides a good indicator for reception or channel conditions, so that reliable or adequate adaptation of the advertisement area can be achieved.

According to a second aspect which can be combined with the above first aspect, the estimator may be adapted to estimate the received signal strength during a reservation handshake. This provides the advantage that no additional or separate estimation phase or test signal is required for the proposed estimation.

According to a third aspect which can be combined with any one or both of the above first and second aspects, the estimator may be adapted to estimate the required amount of protection based on the estimated signal strength and at least one of a modulation and coding scheme. The additional consideration of the modulation and/or coding scheme may lead to an enhanced estimation result.

According to a fourth aspect which can be combined with any one or both of the above first and second aspects, the propagation information may comprise a propagation count to be decremented or incremented during advertisement. The proposed use of the propagation count for advertisement control enables straight forward control by simply incrementing or decrementing the propagation count until a predetermined number or value has been reached.

According to a fifth aspect which can be combined with any one or all of the above first to third aspects, the advertising controller may be adapted to modify the propagation information by decrementing or incrementing the propagation count if the propagation count does not match with a predetermined number, or to drop the status information if the propagation count matches with the predetermined number. This decision enables direct control of the advertisement area by dropping the advertised status information and thus discontinuing re-advertisement if the propagation count has reached a predetermined number.

According to a sixth aspect which can be combined with any one or all of the above first to fourth aspects, the advertising controller may be adapted to consider only the highest propagation count if more than one advertisement of the same status information is received. This measure ensures that in a decrementing control system only those advertisements with least amounts of deduction from the propagation count and thus smallest numbers of re-transmissions are considered.

According to a seventh aspect which can be combined with any one or all of the above first to sixth aspects, the advertising controller may be adapted to check the propagation information only if it is received at least with a predetermined signal strength. Thereby, only advertisements with sufficient quality are considered.

According to an eighth aspect which can be combined with any one or all of the above first to seventh aspects, the advertising controller may be configured to re-advertise the status information to a subset of those radio nodes overhearing the status information. In a specific example, the subset of radio nodes may be those nodes which have a peer link established with an advertising node which has advertised the status information. This provides the advantage that advertisement can be limited to desired radio nodes.

According to a ninth aspect which can be combined with any one or all of the above first to eighth aspects, the status information may be a reservation information for avoiding interference during a reserved transmission, and the advertisement area may be a reservation area. Thus, the proposed flexible advertisement control can be used for controlling a reservation area used for reservation advertisements.

Further advantageous developments are defined in the dependent claims.

### BRIEF DESCRIPTION OF THE DRAWINGS

The present invention will now be described based on various embodiments with reference to the accompanying drawings in which:
Fig. 1 shows a schematic network topology of several wireless nodes in a mesh network;
Figs. 2A and 2B show an interference area and its dependency on a distance between a transmitter and a receiver;
Fig. 3 shows a schematic flow diagram of a transmitter-side advertisement control procedure according to a first embodiment;
Fig. 4 shows a schematic flow diagram of a receiver-side advertisement control procedure according to a second embodiment; and
Fig. 5 shows a schematic block diagram of an advertisement controller according to a third embodiment.

### DETAILED DESCRIPTION OF EMBODIMENTS

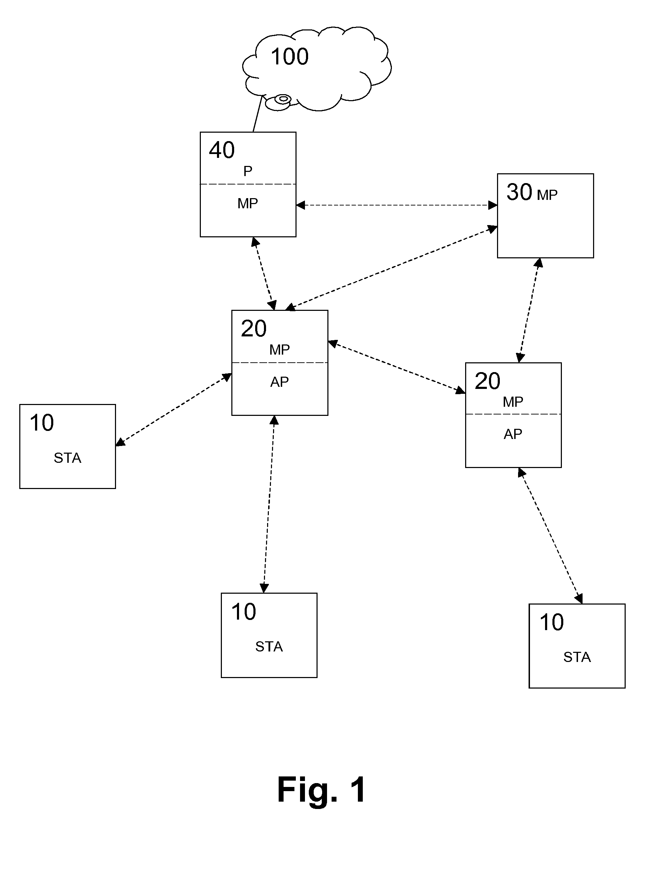

In the following, embodiments of the present invention are described on the basis of an exemplary wireless mesh network topology as shown in Fig. 1.

Many WLAN implementations can benefit from support of more flexible interoperable wireless connectivity. Functionally, an access point (AP) can be enhanced by interoperable wireless links or multi-hop paths between multiple APs. End-user devices (such as end stations (STAs)) 10 can benefit from the ability to establish interoperable peer-to-peer wireless links with neighbouring end-user devices and APs in a mesh network. Mesh points (MPs) 30 can be quality of service (QoS) STAs that support mesh services, i.e. they participate in interoperable formation and operation of the mesh network. An MP may be collocated with one or more other entities (e.g., AP, portal, etc.). The configuration of an MP that is collocated with an AP is referred to as a mesh access point (MAP) 20. Such a configuration allows a single entity to logically provide both mesh functionalities and AP functionalities simultaneously. STAs associate with APs to gain access to the network. The configuration of an MP that is collocated with a portal (P) is referred to as a mesh portal 40. MPs participate in mesh functionalities such as path selection and forwarding, etc. The mesh portal 40 provides an interface to other networks 100, e.g., to other IEEE 802 LAN segments.

Fig. 3 shows a schematic flow diagram of an advertisement control mechanism or procedure in a mesh network, according to a first embodiment. Here, a propagation count is used as propagation (control) information for controlling the advertisement area.

According to Fig. 3, both transmitter (or transmitting end) and receiver (or receiving end) involved in an advertisement (e.g. reservation advertisement) estimate the received signal strength of the transmission by the other party in the transmission, e.g. based on a reservation handshake or another suitable preparatory or dedicated signaling (step S101). Based on this estimate and optionally also at least one of a modulation and coding scheme in use, they can estimate the amount of protection needed to correctly receive the messages from the other party (step S102). This amount of protection, which can be a qualitative or quantitative classification, is then translated in step S103 into a propagation parameter or information, such as for example a propagation count to be incremented or decremented, based on which the actual advertisement area (e.g. reservation area) can be defined and controlled. Given this indirect estimate of the needed advertisement area, i.e. the propagation count, the radio node concerned now advertises its reservation, along with the propagation count (step S104). The propagation count can be a non-negative number adapted to the received signal strength and optionally also to at least one of the modulation scheme, the coding scheme and any other suitable parameter in use, which influences reception quality.

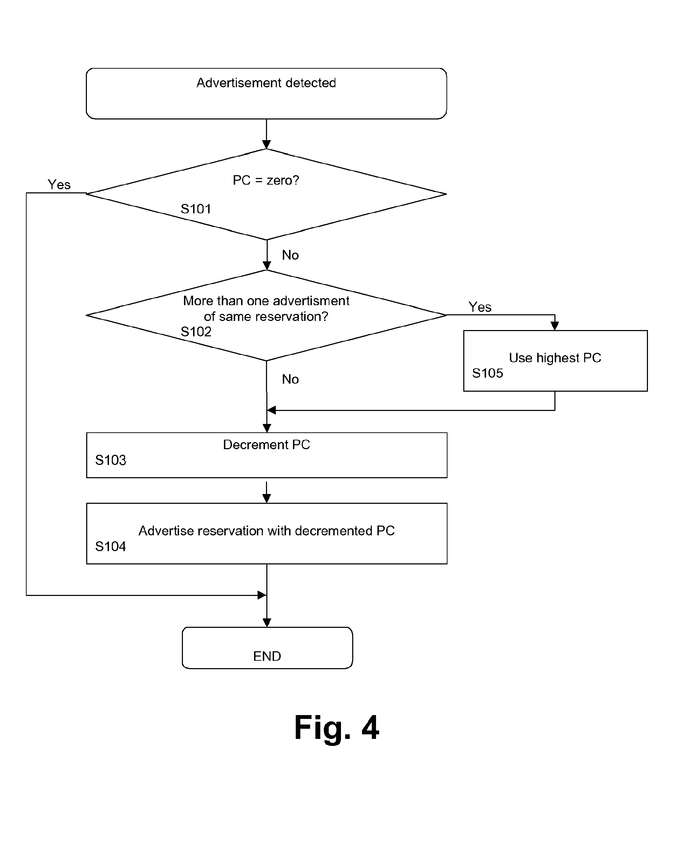

Fig. 4 shows a schematic flow diagram of an advertisement control mechanism according to a second embodiment at a receiving side of an advertised information, e.g. at any radio node in radio communication range, which overhears this advertisement. Again, the propagation count is used as propagation (control) information for controlling the advertisement area, wherein a decrementing control function is selected. As an alternative, propagation control may as well be based on an incrementing control function.

The control procedure in Fig. 4 is triggered whenever an advertisement is detected. In step S101, it is checked whether the propagation count (PC) of a received advertisement has reached a predetermined threshold value, which is zero in the present example. If the PC has reached zero, the procedure ends and the advertisement will not be re-advertised and thus dropped.

Otherwise, if the PC has not yet reached zero, it may optionally be checked in step S102 whether more than one advertisement of the same status information (e.g. reservation) has been received. If so, the procedure branches to step S105 and the highest PC of the received advertisements of the same status information is selected for further use in the remaining procedure. Then, the procedure continues with step S103. If only one advertisement of the same status information has been determined in step S102, the procedure proceeds with step S103 and the PC is decremented by one. Then, in step S104, the received advertisement is re-advertised with the decremented PC and the procedure ends.

Every radio node overhearing an advertisement may act similarly. So the propagation count will be lowered until it reaches zero. The rule then is that a radio node overhearing an advertisement with a propagation count equal to zero no longer propagates the advertisement. Rather, in case of an advertised reservation, it will respect the advertisement by not transmitting a message to the advertising radio node during the reserved period. It is free, however, to transmit to any radio node which does not advertise the reservation.

In the above procedure according to the second embodiment, if a radio node receives or overhears several advertisements of the same status information (e.g. reservation), with different propagation counts, it advertises this reservation only once, but with the highest received propagation count decremented by one. A similar rule may be applied to a transmitter-receiver pair involved in setting up a reservation. Thus, it can be that one of the two nodes uses a propagation count which is two or more higher than the propagation count of the other party. In this case, this latter node will use the propagation count of the former node minus one, rather than its own (lower) propagation count.

The proposed advertisement control procedure can also be finer grained. For example, not every radio node overhearing an advertisement starts re-advertising the advertisement (with lower PC) in its own advertisements. Rather, they may only do so when they detect an advertisement which is received with at least predefined signal strength. Also, it is possible to limit the re-advertisements to a subset of the radio nodes overhearing the advertisement. E.g., only those nodes having a peer link established with the advertising radio node, re-advertise the reservation (with lower PC).

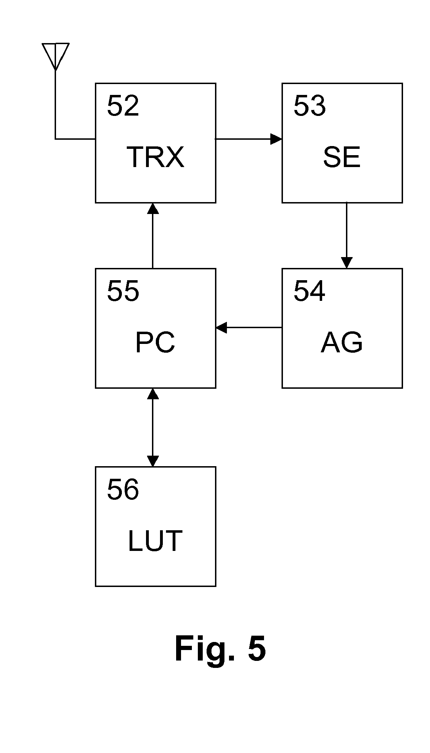

Fig. 5 shows a schematic block diagram of an advertisement controller or control functionality according to a third embodiment, which can be provided in a radio node (e.g. mesh point, mesh access point, mesh portal, or any other type of radio node). It can be implemented as a discrete hardware circuit or circuitry, a chip, a chip set, a module or a software-controlled processor or computer device where the functions of Fig. 5 are provided as software programs or routines.

Advertisements can be received and transmitted by a transceiver (TRX) circuit 52 which may be provided in a radio frequency (RF) front end of the radio node. Advertisements which are initiated at the advertisement controller can be generated in an advertisement generator (AG) 54 and supplied to the TRX 52 via a propagation control unit 55 which adds a PC or another propagation control information to a new advertisement or which checks for a PC or another propagation control information in a received advertisement, selectively decrements (or increments) the PC, and sets the modified PC in the re-advertisement. Control values such as the PC threshold value for selective dropping of an advertisement, or other PCs of same advertisements can be stored in a look-up table (LUT) 56 which may be provided in a memory or register or the like, e.g., as a programmable nonvolatile storage. Additionally, a signal estimation unit 53 is provided, which estimates signal strength of a received advertisement, or an initial handshake signaling in case of an initiation of a new advertisement at the concerned node. The signal estimation may be based on signal-to-noise ratio, an error rate or any other kind of parameter or ratio suitable to estimate the quality of the received advertisement.

Thus, the functionalities of the advertisement controller of Fig. 5 enable implementation of either one or both of the advertisement control procedures described in connection with Figs. 3 and 4.

In summary, a method and apparatuses have been described, which enable flexible spreading of an advertised information (e.g. reservation) by addition of a propagation control value or information (e.g. propagation count), which is spread along the advertised information to flexibly adapt the spreading area to a current channel situation at hand.

It is noted that the present invention is not restricted to the above embodiments and can be used for any network environment which allows advertisement of status information. The proposed procedure can be used in connection with any kind of status information which needs to be advertisement. It is thus not limited to reservation advertisements. The propagation information used for controlling the advertisement area may be any type of information. It is not limited to a count value which is to be incremented or decremented successively. Any modification of the propagation information may be effected prior to re-advertisement, as long as it can be translated to or linked with the advertisement area. As an alternative to the above embodiments, a bit pattern may be modified in a predetermined manner or predetermined bit positions may be set in accordance with predetermined rules. As a further alternative, a predetermined value may be assigned or allocated to each re-advertisement.

Variations to the disclosed embodiments can be understood and effected by those skilled in the art, from a study of the drawings, the disclosure and the appended claims. In the claims, the word "comprising" does not exclude other elements or steps, and the indefinite article "a" or "an" does not exclude a plurality of elements or steps. A single processor or other unit may fulfill the functions of several items recited in the claims. The mere fact that certain measures are recited in mutually different dependent claims does not indicate that a combination of these measures cannot be used to advantage. A computer program used for controlling processor to perform the claimed features may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope thereof.

## Claims

1. An apparatus for advertising a status information in a mesh network, said apparatus (10) comprising:
a) an estimator (53) for estimating an amount of protection required for sufficient reception from other parties; and
b) an area adaptor (55) for deriving from said estimated amount of protection a propagation information which defines an actual advertisement area, and for advertising said propagation information along with said status information.

2. An apparatus according to claim 1, wherein said estimator (53) is adapted to estimate received signal strength and to estimate said required amount of protection based on said estimated signal strength.

3. An apparatus according to claim 2, wherein said estimator (53) is adapted to estimate said received signal strength during a reservation handshake.

4. An apparatus according to claim 2, wherein said estimator (53) is adapted to estimate said required amount of protection based on said estimated signal strength and at least one of a modulation and coding scheme.

5. An apparatus for advertising a status information in a mesh network, said apparatus (10) comprising:
a) a detector (53) for detecting a propagation information in a received status information; and
b) an advertising controller (55) for checking said propagation information and for deciding whether to either modify and re-advertise or drop said status information based on said received propagation information.

6. An apparatus according to claim 1 or 5, wherein said propagation information comprises a propagation count to be decremented or incremented during advertisement.

7. An apparatus according to claim 6, wherein said advertising controller (55) is adapted to modify said propagation information by decrementing or incrementing said propagation count if said propagation count does not match with a predetermined number, or to drop said status information if said propagation count matches with said predetermined number.

8. An apparatus according to claim 6, wherein said advertising controller (55) is adapted to consider only the highest propagation count if more than one advertisement of the same status information is received.

9. An apparatus according to claim 5, wherein said advertising controller (55) is adapted to only check said propagation information if it is received at least with a predetermined signal strength.

10. An apparatus according to claim 5, wherein said advertising controller (55) is configured to re-advertise said status information to a subset of radio nodes overhearing said status information.

11. An apparatus according to claim 10, wherein said subset of radio nodes are those nodes which have a peer link established with an advertising node which has advertised said status information.

12. An apparatus according to claim 1 or 5, wherein said status information comprises a reservation information for avoiding interference during a reserved transmission, and wherein said advertisement area is a reservation area.

13. A method of advertising a status information, said method comprising advertising a propagation information along with said status information to flexibly adapt the advertisement area to a current reception condition.

14. A system for advertising a status information in a mesh network, said system comprising at least one network node having an apparatus according to claim 1, and at least one network node having an apparatus according to claim 5.

15. A computer program product comprising code means for generating the steps of claim 13 when run on a computer device.
